Europäisches Patentamt

European Patent Office

Office européen des brevets

(19)

(11) Veröffentlichungsnummer : **0 064 795**
**B1**

(12) # EUROPÄISCHE PATENTSCHRIFT

(45) Veröffentlichungstag der Patentschrift :
28.08.85

(51) Int. Cl.⁴ : **B 01 D 35/12**

(21) Anmeldenummer : **82200548.4**

(22) Anmeldetag : **06.05.82**

(54) **Verfahren zur kontinuierlichen Eindickung von Suspensionen.**

(30) Priorität : **12.05.81 CH 3052/81**

(43) Veröffentlichungstag der Anmeldung :
**17.11.82 Patentblatt 82/46**

(45) Bekanntmachung des Hinweises auf die Patenterteilung : **28.08.85 Patentblatt 85/35**

(84) Benannte Vertragsstaaten :
**AT BE CH DE FR GB IT LI NL SE**

(56) Entgegenhaltungen :
DE-A- 1 903 149
DE-A- 2 412 404
DE-A- 2 757 090
DE-B- 1 284 944
DE-B- 1 536 888
DE-U- 1 948 729

(73) Patentinhaber : **DrM, Dr. Müller AG**
**Alte Landstrasse 421**
**CH-8708 Männedorf ZH (CH)**

(72) Erfinder : **Müller, Hans, Dr. Ing.**
**Im Allmendli**
**CH-8703 Erlenbach (CH)**

(74) Vertreter : **Herrmann, Peter**
**Bauernhalde 9**
**CH-8708 Männedorf ZH (CH)**

## Beschreibung

Die Erfindung betrifft ein Verfahren zur kontinuierlichen Eindickung von Flüssgkerts/Feststoff-Suspensionen in einem Filtereindicker mit kerzenförmigen, Vertikalen von aussen nach innen durchströmenden Alterelementen, die an einzelnen herausnehmbaren Sammelrohren hintereinander in einem zylindrischen Behälter hängend befestigt sind, wobei sich der Feststoff an der äusseren Oberfläche der Filterlerzen ablagert und durch Rückspülung entgegengesetzt zur Filtrationsrichtung entfernt wird.

Aus der US-A-2,035,592 ist ein Filtereindicker mit hängenden Filterelementen in einem Druckbehälter bekannt. Die Gesamtheit der Filtermente wird in bestimmten Intervallen nach Unterbrechen der Filtration mit Druckluft im Gegenstrom abgereinigt. Mit dem bekannten Eindicker ist eine kontinuierliche Eindickung bzw. Filtration nicht möglich. Zur Abreinigung der Filterelemente muss die Filtration vollständig unterbrochen werden.

Aufgabe der Erfindung ist es, ein kontinuierliches Verfahren zur Eindickung von Suspensionen zu schaffen, bei welchem die Filtration als ganzes nicht unterbrochen werden muss.

Diese Aufgabe wird erfindungsgemäss durch ein Verfahren nach Patentanspruch 1 gelöst und ist dadurch gekennzeichnet, dass zur Entfernung des Filterkuchens ohne Unterbrechung der Filtration ein einzelnes Sammelrohr durch ein rasch schliessendes Ventil abgestellt und die Filterelemente des entsprechenden Sammelrohres durch Druckstoss über ein rasch öffnendes Ventil mittels eines Rückspülmittels vom Feststoff befreit werden.

Als Rückspülmittel dienen in der Regel Druckluft, es kann aber auch, wenn erforderlich, inertes Gas wie Stickstoff oder Kohlenstoffdioxid verwendet werden. Auch Flüssigkeiten wie Wasser oder Lösungsmittel können als Rückspülmittel dienen. Die Rückspülung erfolgt automatisch, wobei die Ventile pneumatisch oder magnetisch betätigt werden. Es ist unbedingt notwendig, schnell arbeitende Ventile zu verwenden. Der Abfluss des Filtrates aus dem jeweiligen Sammelrohr muss rasch unterbrochen werden, wodurch allein durch den erfolgenden Rückschlag ein grosser Teil der Feststoffe von den Filterelementen abgelöst wird und zu Boden sinkt. Der Schlammstoff wird über das Bodenventil periodisch aus dem Behälter ausgetragen. Bei Verwendung von Gas oder Luft als Rückspülmittel sorgt ein Entlüftungsventil an der höchsten Stelle des Behälterdeckels für die Entgasung.

Die Erfindung soll anhand der Zeichnung erläutert werden.

Es zeigen

Figur 1   einen Längsschnitt durch den Filtereindicker,

Figur 2   einen Querschnitt an der Stelle A-A,

Figur 3   ein Aufriss einer ausserhalb des Behälters liegenden Einheit.

Der Behälter 1 ist mit einem Eintrittstutzen 2 für die zu filtrierende Trübe, einem Austrittstutzen 3 für das Filtrat sowie einem Entlüftungsstutzen 4 im Deckel 5 und einem Stutzen 6 zum Abing des Dickstoffs im Apex des konischen Teiles versehen. Hinter dem Eintrittstutzen 2 ist ein Prallblech 7 angebracht. Der Austrittstutzen 3 wird durch ein schematisch dargestelltes Rohrteil 8 und ein Abzweigrohr 9 verlängert. Das Rohr 8 ist durch ein Ventil 10 und das Rohr 9 durch ein Ventil 11 verschliessbar. Vom Stutzen 4 führt eine Leitung 12 zum Entlüftungsventil 13. Das Entlüftungsventil 13 wird über einen Niveauregler 29 gesteuert, so dass beim Oeffnen des Ventil 13 nur Gas und keine Flüssigkeit entweichen kann. Der Austrittstutzen 6 ist über ein Ventil 14 abzuschliessen. Im Innern des Behälters 1 ist ein Sammelrohr 15 über einen Flansch 16 befestigt. Das Sammelrohr 15 liegt auf der Gegenseite auf einer halbkreisförmigen Kante 17 auf. Der Kessel ist mit seinem Flansch 18 am Flansch 19 eines Zwischenringes 20 befestigt. Der Deckel 5 ist mit seinem Flansch 22 am oberen Flansch 21 des Zwischenringes 20 befestigt. Am Sammelrohr 15 sind hintoremander (in Serie) die Filterelemente 23 über Rohrteile 24 und Befestigungen 25 hängend angebracht.

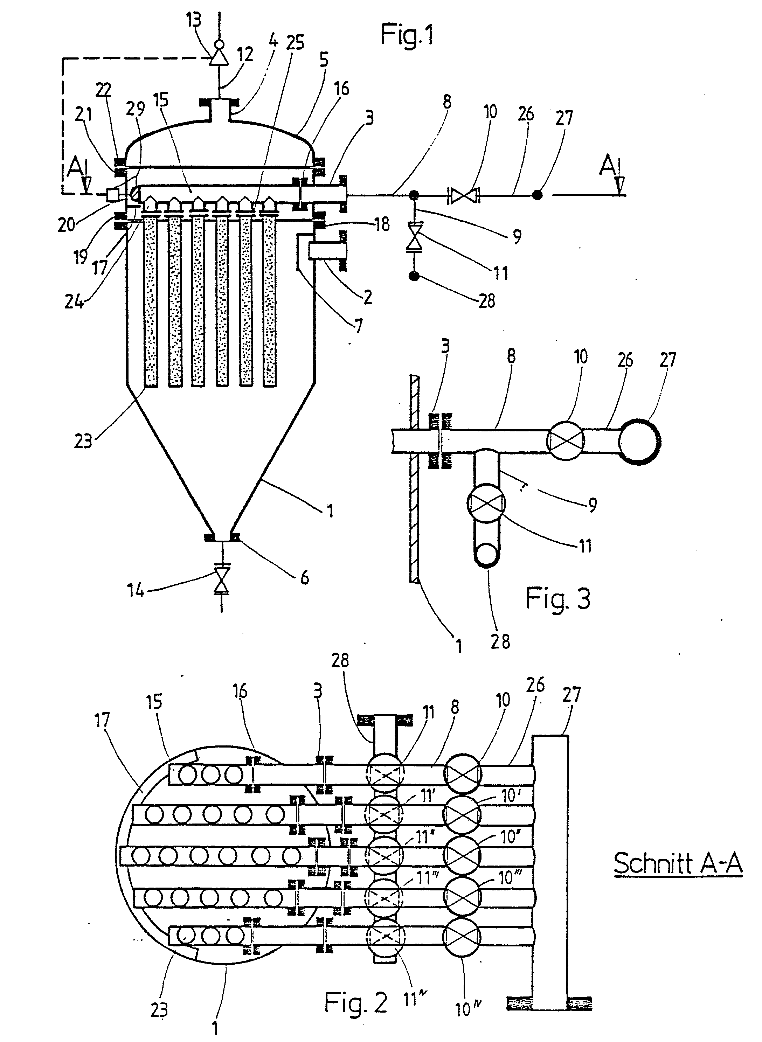

In Figur 2 sind die im Filterkessel parallel angeordneten Sammelrohre 15 dargestellt. Jedes Sammelrohr ist über einen Stutzen 3 mit den Ventilen 10, 10', 10'', 10''', 10'$^V$ verbunden. Die Leitungen 26 führen auf eine Sammelleitung 27. Es wurden der Uebersicht wegen nur die Ventile mehrfach bezeichnet. Die Luftleitung 28 ist unterhalb oder oberhalb der Leitung 8 angebracht. Die Rohre 9 führen über die Ventile 11, 11', 11'', 11''', 11'$^V$ auf die Rohrteile 8.

Im Betrieb wird über den Stutzen 2 einzudickende Flüssigkeit in den Filterkessel 1 mittels einer nicht gezeigten Pumpe gefördert. Das Prallblech 7 verhindert zu starke Turbulenz, welche den auf den Filterelementen 23 abgelagerten Filterkuchen beschädigen könnten. Die Flüssigkeit tritt von aussen durch die Filtermittel der Filterelemente 23 hindurch. Als Filtermittel kommen metallene oder textile Gewebe infrage. Auf den Geweben der Filterelemente 23 setzen sich die Feststoffe ab und bilden, je nach deren Art, mehr oder weniger dicke Filterkuchen. Das Filtrat fliesst über die Rohrteile 24 in das Sammelrohr 15, das Rohrteil 8 und das offene Ventil 10, sowie den Rohrabschnitt 26 in das Filtratsammelrohr 27.

Nach einer empirisch festzulegenden Zeit wird das Ventil 10 eines Sammelrohres 15 rasch geschlossen, jedoch die Filtration der anderen Sammelrohre fortgesetzt. Nachdem das Ventil 10 geschlossen wurde, wird das rasch öffnende Ventil 11 betätigt, wodurch Luft oder ein anderes Rückspülmittel über das Rohr 8 einen Druckstoss hervorruft, der sich über die Flüssigkeit derart fortsetzt, dass der Filterkuchen von den Elementen 23 abgeworfen wird. Der Filterkuchen fällt durch Schwerkraft in den Apex des konischen Filterteils und sammelt sich dort an, von wo er von Zeit zu Zeit über das Ventil 14 im Stutzen 6 abgezogen werden kann. Nach Abwurf des Filterkuchens, was nur einige Sekunden in Anspruch zu nehmen braucht, wird das Ventil 11 wieder geschlossen, das Ventil 10 geöffnet und die Eindickung mit der unterbrochenen Filterreihe wieder fortgesetzt.

Auf diese Weise können die Sammelrohre 15 mit den daran befestigten Filterelementen 23 sukzessive abgestellt, die Filterelemente gereinigt und das entsprechende Sammelrohr wieder in Betrieb genommen werden.

Es leuchtet ein, dass so eine praktisch kontinuierliche Eindickung vorgenommen werden kann, die voll automatisch durchgeführt wird. Die Automatik beschränkt sich auf rasch arbeitende, zeitlich eingestellte Ventile.

Filtrationsversuche mit Abwasser aus einer biologischen 2-Stufenanlage brachten auf einem Laborkerzenfilter der Art mit 170 cm$^2$ Filterfläche eine Anfangsleistung von 6 000 l pro m$^2$ und Stunde. Nach Absinken der Leistung der Filtereinheit während einer Filtrationszeit von 5 Minuten auf 2 000 l pro m$^2 \cdot$ h konnte nach dem Reinigen, welches 30 Sekunden in Anspruch nahm, wieder die volle Leistung der Filterelemente erreicht werden.

## Patentansprüche

1. Verfahren zur kontinuierlichen Eindickung von Flüssigkeits/Feststoff-Suspensionen in einem Filtereindicker mit kerzenförmigen, vertikalen von aussen nach innen durchströmenden Filterelementen (23), die an einzelnen herausnehmbaren Sammelrohren (15) hintereinander in einem zylindrischen Behälter (1) hängend befestigt sind, wobei sich der Feststoff an der äusseren Oberfläche der Filterkerzen ablagert und durch Rückspülung entgegengesetzt zur Filtrationsrichtung entfernt wird, dadurch gekennzeichnet, dass zur Entfernung des Filterkuchens ohne Unterbrechung der Filtration ein einzelnes Sammelrohr (15) durch ein rasch schliessendes Ventil (10, 10',10'', ...) abgestellt und die Filterelemente (23) des entsprechenden Sammelrohres (15) durch Druckstoss über ein rasch öffnendes Ventil (11, 11', 11'', ...) mittels eines Rückspülmittels von Feststoff befreit werden.

2. Verfahren nach Anspruch 1, dadurch gekennzeichnet, dass als Rückspülmittel ein Gas verwendet wird.

3. Verfahren nach Anspruch 2, dadurch gekennzeichnet, dass als Gas Luft verwendet wird.

4. Verfahren nach Anspruch 1, dadurch gekennzeichnet, dass als Rückspülmittel eine Flüssigkeit verwendet wird.

5. Verfahren nach den Ansprüchen 1 bis 4, dadurch gekennzeichnet, dass die Rückspülung in vorgegebenen Intervallen automatisch erfolgt.

6. Verfahren nach den Ansprüchen 1 bis 5, dadurch gekennzeichnet, dass die Entlüftung des Eindickers im Deckel (5) des Behälters (1) erfolgt.

7. Verfahren nach den Ansprüchen 1 bis 5, dadurch gekennzeichnet, dass der Abzug des Dickstoffs über einen Stutzen (6) im Boden des Behälters (1) erfolgt.

## Claims

1. Process for the continuous thickening of liquid/solid suspensions in a filter-concentrator with plug-shaped vertically suspended filter elements (23), which are removably fixed on individual collector tubes (15) in a cylindrical container (1) where the liquid passes through the filter elements (23) from the outside to the inside, the solids are deposited on the external surface of the plug-shaped filter elements and are removed by flushing back opposite to the direction of filtration, wherein to remove the filter cake without interrupting the filtration, a single collecting tube (15) is disconnected by a quickly shutting valve (10, 10',10'') freeing the filter elements (23) of the corresponding collector tube (15) of solids through pressure surge by way of a flushing back agent through a quickly opening valve (11,11', 11'').

2. Process according to claim 1, wherein the flushing back agent is a gas.

3. Process according to claim 2, wherein the gas is air.

4. Process according to claim 1, wherein the flushing back agent is a liquid.

## Revendications

1. Procédé pour épaissir en continu des suspensions liquide/substance solide dans un épaississeur à filtre comportant des filtres élémentaires verticaux (23) en forme de bougies, traversés de l'extérieur vers l'intérieur et qui sont fixés les uns derrière les autres en position suspendue à différents tubes collecteurs démontables (15), à l'intérieur d'un récipient cylindrique (1), la substance solide se déposant sur la surface extérieure des bougies filtrantes et étant éliminée par un nettoyage à contre-courant de sens opposé à la direction de filtration, caractérisé en ce que, pour éliminer le gâteau de filtration sans interrompre la filtration, on met hors service un seul tube collecteur (15) à l'aide d'une valve à fermeture rapide (10, 10', 10'', ...) et on débarrasse de la substance solide les filtres élémentaires (23) du tube collecteur correspondant (15) par un coup de bélier obtenu, à travers une valve à ouverture rapide (11, 11', 11'', ...), au moyen d'un agent de nettoyage à contre-courant.

2. Procédé selon la revendication 1, caractérisé en ce qu'on utilise un gaz comme agent de nettoyage à contre-courant.

3. Procédé selon la revendication 2, caractérisé en ce qu'on utilise de l'air comme gaz.

4. Procédé selon la revendication 1, caractérisé en ce qu'on utilise un liquide comme agent de nettoyage à contre-courant.

**0 064 795**

Fig.1

Fig. 3

Fig. 2

Schnitt A-A